# EUROPÄISCHE PATENTSCHRIFT

(11) **EP 1 726 854 B1**
(45) Veröffentlichungstag und Bekanntmachung des Hinweises auf die Patenterteilung: **11.03.2015**
(21) Anmeldenummer: 06010731.5
(22) Anmeldetag: 24.05.2006
(51) Int. Cl.: F16K 7/10, A01C 23/00

(54) **Vorrichtung zum Verschliessen eines Rohres**
Device for closing a pipe
Dispositif pour obturer une conduite

(30) Priorität: 28.05.2005 DE 202005008363 U
(43) Veröffentlichungstag der Anmeldung: 29.11.2006
(73) Patentinhaber: Hugo Vogelsang Maschinenbau GmbH, 49632 Essen (DE)
(72) Erfinder: Vogelsang, Hugo, 49632 Essen (DE); Krampe, Paul, 49632 Essen (DE); Abeln, Michael, 49632 Essen (DE)
(74) Vertreter: Eisenführ Speiser

(56) Entgegenhaltungen:
- CH-A- 693 995
- DE-A1- 3 830 258
- DE-A1- 10 114 559
- FR-A- 2 860 569

## Beschreibung

Die Erfindung bezieht sich auf eine Vorrichtung zur Verteilung von flüssigen mit Feststoffen beladenen organischen Düngerstoffen, aufweisend einen verfahrbaren Behälter für die Düngerstoffe, eine Pumpe sowie einen Verteiler mit einer Mehrzahl von Ablaufschläuchen mit jeweils einem Schlauchleitungsschalter für die gesteuerte Abgabe der Düngerstoffe, wobei der Schlauchleitungsschalter ein im Wesentlichen zylindrisches Gehäuse mit Anschlüssen und ein Schaltelement im Inneren des Gehäuses aufweist

Eine solche fahrbare Gülle-Ausbringungsvorrichtung ist bekannt (DE 101 14 559 A1), wobei der Verteiler als Verteilerrohr mit Gülle-Austragorganen mit angesteuerten Drosseleinheiten zur Regelung der abzugebenden Güllemenge ausgebildet ist. Über die Düsen der Drosseleinheiten werden Lüftströme in das Verteilerrohr eingeblasen, um den Güllestrom zu regeln. Dies bringt mit sich, dass die Düsen mit der meist sehr aggressiven Gülle in Kontakt geraten und dadurch deren Funktionsfähigkeit beeinträchtigt werden kann.

Schleppschlauchverteiler für flüssige Wirtschaftsdünger benötigen Verteiler, die in der Lage sind, den mittels einer Pumpe dem Verteiler zugeführten flüssigen Wirtschaftsdünger gleichmäßig in eine Reihe von Ablaufschläuchen zu dosieren. Mittels der Ablaufschläuche wird der Wirtschaftsdünger dann streifenförmig bodennah aufs Land aufgebracht. Die Ausbringbreite wird durch die Anzahl der Ablaufschläuche und den Reihenabstand der Streifen bestimmt. Die Schläuche werden mittels eines klappbaren Gestänges getragen und geführt.

Bei Lohnunternehmern, die im Auftrage mehrerer Landwirte den Flüssigmist ausbringen, besteht die Anforderung, die Gestänge mit unterschiedlichen Arbeitsbreiten auszurüsten, da die Lohnunternehmer aufgrund verschiedener Arbeitsbreiten der Pflanzenschutz-Spritzen unterschiedliche Fahrgassenbreiten vorfinden.

Eine weitere Anforderung, die Arbeitsbreite der Ausbringgeräte verändern zu müssen, folgt daraus, dass die Feldflächen nicht immer eine einheitliche Breite besitzen. In diesen Fällen bleiben dreieckförmige Randflächen übrig, bei denen während des Düngevorgangs die Arbeitsbreite verändert werden muss, um eine Überdüngung benachbarter Flächen zu vermeiden.

Eine Möglichkeit, diese Anforderungen zu erfüllen, besteht darin, die Gestänge für die maximale Arbeitsbreite auszulegen und erforderlichenfalls nur einen Teil der Ablaufschläuche zu beaufschlagen (Teilbreitenschaltung). Dazu muss von den zur Verfügung stehenden Ablaufschläuchen eine gewisse Anzahl - meist links und rechts außen liegend - verschlossen werden.

Zurzeit werden die Schläuche "von Hand" mittels Kugelhähnen abgesperrt, die unmittelbar am Verteilerkopf in die Ablaufschläuche eingebaut sind. Solange die Abschaltung nicht während des Ausbringvorgangs selbst eingeleitet werden muss, lässt sich dies bewerkstelligen.

Es ist ein Ventil zur Ausgabe von Gülle oder Klärschlamm bekannt (CH 693 995 A), welches zwischen zwei Schlauchnippeln zwei flexible Schläuche aufweist. Durch den inneren Schlauch strömt die Gülle, sofern nicht der Zwischenraum zwischen den Schläuchen unter Druck gesetzt wird, um den inneren Schlauch zusammenzupressen, um den Güllestrom abzusperren. Dies kann nicht zuverlässig sichergestellt werden, weil Gülle auch mit Feststoffen und Grobpartikeln beladen ist, die den Schließvorgang be- oder verhindern.

Es ist eine Sperrvorrichtung für Flüssigkeiten bekannt (FR-A-2 860 569), bei welcher im Inneren eines Rohres eine nachgiebige Struktur mit Hilfe einer Zugvorrichtung gehaltert ist. Die Zugvorrichtung soll dafür sorgen, dass die nachgiebige Struktur in die zusammengedrückte Gestalt gebracht werden kann, wenn die Sperrvorrichtung geöffnet sein soll. In dieser Lage stellt die nachgiebige Struktur ein Strömungshindernis dar, so dass sich dort und auch an der Zugvorrichtung Festkörper der Gülleflüssigkeit ansammeln werden.

Ziel der Erfindung ist es, eine gezielte Abschaltung für die Ablaufschläuche von Vorrichtungen der eingangs genannten Art zu schaffen, die während des Arbeitens betätigbar und insbesondere auch fernbedienbar ist.

Erreicht wird dies eine Vorrichtung und einen Schlauchleitungsschalter nach den Ansprüchen 1 und 2.

Ziel der Erfindung ist es auch, fernbedienbare Absperrvorrichtungen für Ablaufschläuche von Flüssigmist-Ausbringgeräten zu schaffen, die mit geringem Bauaufwand montiert werden können, so dass sie auch in größerer Anzahl wirtschaftlich eingesetzt werden können. Wenn alle Ablaufschläuche damit ausgerüstet werden, ist die Vorrichtung gemäß der Erfindung auch als Mengenregelung einsetzbar, nämlich dadurch, dass die Absperrvorrichtungen in teilweise geschlossenem Zustand als Drosselorgane funktionieren.

Die Erfindung wird nachstehend anhand der Zeichnung beispielsweise erläutert.
- Fig. 1: zeigt eine Querschnittsansicht durch das Gehäuse eines Schlauchleitungsschalters für eine Vorrichtung gemäß der Erfindung, und zwar in geöffnetem Zustand.
- Fig. 2: zeigt die entsprechende Querschnittsansicht für den Schlauchleitungsschalter in geschlossenem Zustand.

In den Figuren ist mit 11 eine Rohrwandung oder eine Schlauchwand 11 bezeichnet, die sich im Bereich zwischen einem Güllebehälter und einem Ablaufschlauch befindet. Eine nicht gezeigte Pumpe fördert die Gülle bei Betrachtung der Figuren von links nach rechts. Der Schlauch 11 ist bei 12 an einem Rohrstutzen befestigt, so dass eine sichere und feste Rohrleitungsverbindung entsteht.

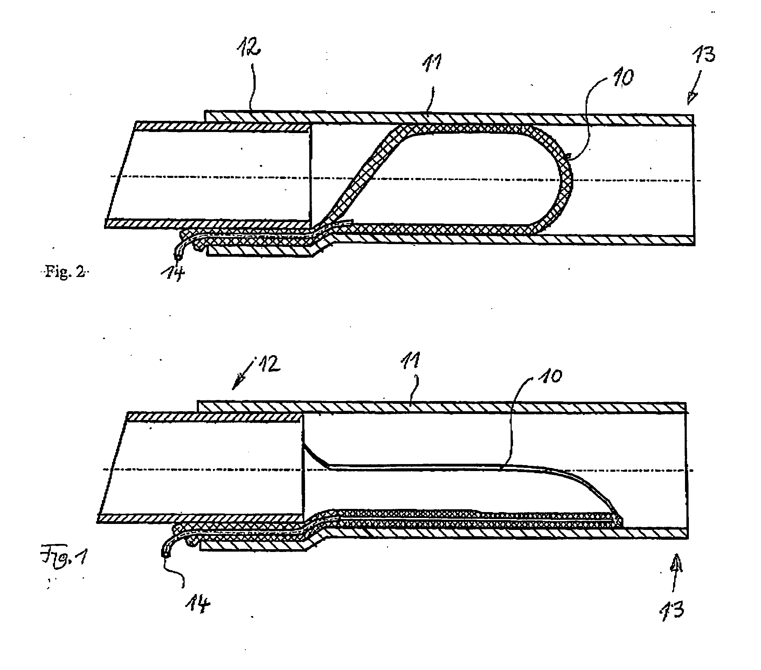

Bei 13 kann aus dem Schlauch 11 heran gepumpte Gülle ausgegeben werden oder auch nicht, was von der Lage und Funktion eines Gummielementes 10 abhängt, der sich im Inneren der Schlauchwand 11 befindet. In seinem aufgeweiteten Zustand, nämlich wenn über eine Zuleitung 14 Druckmittel eingeleitet wird, legt sich das Gummielement wie ein Ballon an die Innenwandung des Schlauches 11 an, so wie dies in Fig. 2 zu erkennen ist. Bei richtiger Dimensionierung und genügend hohem Druck ergibt sich hierdurch eine Lage, so dass keine Gülle am Austrittsende 13 abgegeben werden kann.

In der in Fig. 1 gezeigten Lage liegt das Gummielement 10 schlaff im Schlauch 11, so dass Gülle herangepumpt werden kann, und über die Öffnung 13 ausgegeben werden kann.

In der voran beschriebenen Form wirkt das Gummielement 10 wie ein Schalter, d. h. es geht von der geschlossenen Position in eine geöffnete Position über. Es liegt auf der Hand, den Innendruck im Gummielement 10 über die Zuleitung 14 so zu steuern, dass diese auch stabile Zwischenlagen einnimmt, d. h. den Querschnitt der Rohrleitung nur teilweise öffnet, so dass hierdurch eine gezielte Abgabe an Gülle erreicht werden kann.

Zur Montage wird der flexible Ablaufschlauch 11 so am Verteiler im Bereich etwa einer halben Mantelfläche derart aufgeweitet, dass bei der Schlauchmontage die Tülle des aufblasbaren Gummielements 10 im Spalt zwischen Rohrstutzen und Ablaufschlauch montiert werden kann. Die Tülle des Gummielements ist im Bereich der Rohrbefestigung mit einem dreiecksförmigen Auslauf versehen, der den Spalt zwischen Rohrstutzen und Ablaufschlauch dichtend ausfüllt.

Weiterhin ist in das aufblasbare Gummielement auf gegenüberliegenden Seiten der offenen Tülle zur Aufnahme eines Röhrchens je eine halbkreisförmige Nut einvulkanisiert. Durch das Röhrchen kann z.B. Druckluft in den Innenraum des Gummielements zugeführt werden.

Zur Steuerung der Füllung der einzelnen Gummielemente 10 könnte man sich eine ZylinderKolben-Einheit vorstellen, dessen Kolbenstellung den Zylinder teilt in einen Druckbereich und einen Entlüftungsbereich. Längs des Zylinders sind die einzelnen Befüllungsröhrchen der Gummielemente angeschlossen. Je nach Stellung des Zylinders werden dann mehr oder weniger Gummielemente aufgeblasen.

## Patentansprüche

1. Vorrichtung zur Verteilung von flüssigen mit Feststoffen beladenen organischen Düngerstoffen, aufweisend einen verfahrbaren Behälter für die Düngerstoffe, eine Pumpe sowie einen Verteiler mit einer Mehrzahl von Ablaufschläuchen mit jeweils einem Schlauchleitungsschalter für die gesteuerte Abgabe der Düngerstoffe, wobei der Schlauchleitungsschalter ein im Wesentlichen zylindrisches Gehäuse (11) mit Anschlüssen (12, 13) und ein Schaltelement (10) im Inneren des Gehäuses aufweist, welches im druckmittelfreien Zustand auf einem Teil der Innenwand des Gehäuses lose aufliegt und die Strömung nicht behindert und im aufgeweiteten Zustand sich über den gesamten Umfang der Innenwand an diese dichtend anlegt und die Strömung absperrt, **dadurch gekennzeichnet, dass** das Schaltelement als Ballon (10) ausgebildet ist und dass das Schaltelement (10) eine Tülle mit einem darin aufgenommenen Röhrchen zur Zufuhr von Druckluft in den Ballon aufweist, wobei die Tülle in einem Spalt zwischen einem Rohrstutzen und dem Gehäuse (11) montiert ist.

2. Schlauchleitungsschalter für eine Vorrichtung nach Anspruch 1, mit einem im Wesentlichen zylindrisches Gehäuse (11) mit Anschlüssen (12, 13) und einem Schaltelement (10) im Inneren des Gehäuses, welches im druckmittelfreien Zustand auf einem Teil der Innenwand des Gehäuses lose aufliegt und die Strömung nicht behindert und im aufgeweiteten Zustand sich über den gesamten Umfang der Innenwand an diese dichtend anlegt und die Strömung absperrt, **dadurch gekennzeichnet, dass** das Schaltelement als Ballon (10) ausgebildet ist und dass das Schaltelement (10) eine Tülle mit einem darin aufgenommenen Röhrchen zur Zufuhr von Druckluft in den Ballon aufweist, die derart ausgebildet und angeordnet ist, dass sie in einem Spalt zwischen einem Rohrstutzen und dem Gehäuse (11) montierbar ist.

## Claims

1. Device for distributing liquid organic fertilizers containing solids, comprising a displaceable tank for the fertilizers, a pump, and a distributor having a plurality of discharge hoses, each having a hose line switch for the controlled dispensing of the fertilizers, wherein the hose line switch comprises a substantially cylindrical housing (11) with connections (12, 13) and a switching element (10) inside the housing which, in the absence of pressurizing medium, rests loosely on a portion of the inner wall of the housing and does not hinder the flow and, in the expanded state, bears sealingly against the inner wall around the entire circumference of the inner wall and blocks the flow, **characterized in that** the switching element is configured as a balloon (10), and **in that** the switching element (10) has a sleeve with a pipe accommodated therein for feeding compressed air into the balloon, wherein the sleeve is mounted in a gap between a pipe connector and the housing (11).

2. Hose line switch for a device according to claim 1, comprising a substantially cylindrical housing (11) with connections (12, 13) and a switching element (10) inside the housing which, in the absence of pressurizing medium, rests loosely on a portion of the inner wall of the housing and does not hinder the flow and, in the expanded state, bears sealingly against the inner wall around the entire circumference of the inner wall and blocks the flow, **characterized in that** the switching element is configured as a balloon (10), and **in that** the switching element (10) has a sleeve with a pipe accommodated therein for feeding compressed air into the balloon, said sleeve being configured and arranged in such a way that it can be mounted in a gap between a pipe connector and the housing (11).

## Revendications

1. Dispositif pour la distribution d'engrais organiques liquides, chargés en solides, présentant un réservoir déplaçable pour les engrais, une pompe ainsi qu'un distributeur avec une pluralité de tuyaux souples d'écoulement avec respectivement un commutateur de conduite en tuyau souple pour la sortie commandée des engrais, le commutateur de conduite en tuyau souple présentant un boîtier (11) sensiblement cylindrique avec des raccords (12, 13) et un élément de commutation (10) à l'intérieur du boîtier, lequel repose de manière lâche à l'état sans agent sous pression sur une partie de la paroi intérieure du boîtier et n'empêche pas l'écoulement, et repose à l'état élargi sur la périphérie entière de la paroi intérieure de manière étanche contre celle-ci et bloque l'écoulement,
**caractérisé en ce que** l'élément de commutation est réalisé comme un ballon (10) et **en ce que** l'élément de computation (10) présente une douille contenant un petit tube pour l'amenée d'air comprimé dans le ballon, la douille étant montée dans une fente entre une tubulure et le boîtier (11).

2. Commutateur de conduite en tuyau souple pour un dispositif selon la revendication 1, présentant une boîtier (11) sensiblement cylindrique avec des raccords (12, 13) et un élément de commutation (10) à l'intérieur du boîtier qui, à l'état sans agent sous pression, repose de manière lâche sur une partie de la paroi intérieure du boîtier et n'empêche pas l'écoulement et, à l'état élargi, repose sur la périphérie entière de la paroi intérieure de manière étanche contre celle-ci et bloque l'écoulement, **caractérisé en ce que** l'élément de commutation est réalisé comme un ballon (10) et **en ce que** l'élément de commutation (10) présente une douille contenant un petit tube pour l'amenée d'air comprimé dans le ballon qui est réalisée et agencée de manière à pouvoir être montée dans une fente entre une tubulure et le boîtier (11).
